# EUROPEAN PATENT APPLICATION

(11) **EP 2 169 526 A2**
(43) Date of publication of application: **31.03.2010**
(21) Application number: 09157022.6
(22) Date of filing: 31.03.2009
(51) Int. Cl.: G06F 3/048

(54) **Display system having display apparatus and external input apparatus, and method of controlling the same**

(30) Priority: 29.09.2008 KR 20080095309
(71) Applicant: Samsung Electronics Co., Ltd., Suwon-si, Gyeonggi-do 442-742 (KR)
(72) Inventor: Sung, Hyun-ah, Seoul (KR); Bae, Dae-gyu, Gyeonggi-do (KR)
(74) Representative: Robinson, Ian Michael

(57) **Abstract**

A display system having a display apparatus and an external input apparatus, and a method of controlling the same. In the method an image is displayed on a display apparatus. A phase shift of an external input apparatus is detected. The detected phase shift is transmitted to the display apparatus, and the image displayed on the display apparatus is rotated based on the detected phase shift.

## Description

### BACKGROUND OF INVENTION

### Field of Invention

Apparatuses and methods consistent with the present invention relate to a display system having a display apparatus and an external input apparatus and a method of controlling the same, and more particularly to a display system having a display apparatus having a function to rotate a displayed image and an external input apparatus and a method of controlling the same.

### Description of the Related Art

A display apparatus is a device that displays images provided from an image source, such as a TV, a monitor, or the like. These days, the display apparatus is capable of receiving pictures, such as photos or images, via a variety of external interfaces, e.g., a universal serial bus (USB) memory or a network, to display the pictures.

The pictures vary in size but generally have a rectangular shape. With respect to an aspect ratio of a picture (ratio of a horizontal side to a vertical side), the picture may be in a landscape format, in which the horizontal side is relatively longer than the vertical side, and a portrait format, in which the vertical side is relatively longer than the horizontal side.

For example, a TV has an aspect ratio of 4 to 3 in a general screen or 16 to 9 in a wide screen, which means the horizontal side is longer than the vertical side in both aspect ratios. Thus, when a picture is in the landscape format, it is properly displayed on the display apparatus. However, if the picture is in portrait format, it is displayed as being rotated. That is to say, the portrait image is displayed with the initial horizontal side being laid vertically and the initial vertical side being laid horizontally.

### SUMMARY OF THE INVENTION

According to the present invention there is provided an apparatus and method as set forth in the appended claims. Other features of the invention will be apparent from the dependent claims, and the description which follows.

An aspect of the present invention is to provide a display apparatus having a simple configuration that senses an external stimulus, and a control method thereof.

Another aspect of the present invention is to provide a display apparatus that is less costly to manufacture and that is capable of sensing an external stimulus, and a control method thereof.

The foregoing and other aspects of the present invention can be achieved by providing a method of controlling a display system to display an image, the method may include: displaying an image on a display apparatus; detecting a phase shift according to a movement of an external input apparatus that communicates with the display apparatus; and rotating and displaying the image corresponding to the detected phase shift.

The detecting the phase shift may include detecting a rotation direction and a rotation angle of the external input apparatus on a predetermined axis.

The rotating and displaying the image may include changing a display angle of the image in succession or by stages according to changes in the rotation angle of the external input apparatus.

The rotating and displaying the image may include scaling the image to adjust a size of the image according to a preset condition.

The scaling the image may further include adjusting the image to a proper size to be displayed on a display unit of the display apparatus on which the image is displayed.

The scaling the image may include: further detecting a moving direction and a moving distance according to a linear movement of the external input apparatus; and adjusting a size of the image based on the detected moving direction and the detected moving distance.

The adjusting the size of the image based on the detected moving direction and the detected moving distance may include enlarging the size if the moving direction is a preset direction and reducing the size when the moving direction is in a direction opposite to the preset direction.

The external input apparatus may include a user input unit, and the detecting the phase shift includes detecting a phase shift of the external input apparatus when a preset input is entered via the user input unit.

The displaying the image in the display apparatus may include displaying an image on the external input apparatus that is the same as the image displayed on the display apparatus.

The detecting the phase shift may include detecting a phase shift of the external input apparatus if the same image is displayed in the display apparatus and in the external input apparatus.

The foregoing and other aspects of the present invention can be achieved by providing a display system including: an external input apparatus which includes an external input apparatus main body and a sensor detecting a phase shift according to a movement of the external input apparatus main body; and a display apparatus which includes a communication unit that communicates with the external input apparatus, a display unit that displays an image, and an image processor that rotates the image to be displayed on the display unit based on the phase shift detected by the sensor.

The sensor may detect a rotation direction and a rotation angle of the external input apparatus main body on a predetermined axis.

The image processor may change a display angle of the image continuously or by stages according to changes in the rotation angle of the external input apparatus main body.

The external input apparatus may further include a processor that transmits information related to the rotation direction and the rotation angle detected by the sensor to the display apparatus, and the image processor rotates the image displayed on the display unit in the rotation direction and by the rotation angle transmitted by the processor.

The external input apparatus may further include a processor that transmits a control command to the display apparatus, the control command rotating the image displayed on the display unit in the rotation direction and by the rotation angle detected by the sensor, and the image processor executes the control command.

The image processor may scale the image to adjust a size of the image according to a preset condition.

The image processor may adjust the image to a proper size to be displayed on a display unit.

The sensor may further detect a moving direction and a moving distance according to a linear movement of the external input apparatus main body, and the image processor adjusts a size of the image based on the detected moving direction and the detected moving distance.

The image processor may enlarge the size when the moving direction is a preset direction and reduces the size when the moving direction is in a direction opposite to the preset direction.

The external input apparatus may further include a user input unit, and the sensor detects a phase shift of the external input apparatus main body when a preset input is entered via the user input unit.

The external input apparatus may display an image that is the same as the image displayed on the display unit.

The sensor may detect a phase shift of the external input apparatus when the image that is displayed on the display unit is the same as the image that is displayed on the external input apparatus.

The foregoing and other aspects of the present invention can be achieved by providing a display apparatus including: a communication unit which communicates with an external input apparatus; a display unit which displays an image; and an image processor which rotates the image displayed on the display unit based on a phase shift when the communication unit receives information related to the phase shift according to a movement of the external input apparatus.

The information related to the phase shift may include a rotation direction and a rotation angle of the external input apparatus on a predetermined axis, and the image processor rotates the image displayed on the display unit in the rotation direction and by the rotation angle.

The image processor may execute a control command to rotate the image when the communication unit receives the control command from the external input apparatus, the control command rotating the image displayed on the display unit in a predetermined rotation direction and by a predetermined rotation angle detected by the sensor.

The image processor may change a display angle of the image continuously or by stages according to changes in the rotation angle.

The image processor may scale the image to adjust a size of the image according to a preset condition.

The image processor may adjust the image to a proper size to be displayed on a display unit.

When the communication unit further receives a moving direction and a moving distance according to a linear movement of the external input apparatus, the image processor may adjust a size of the image based on the moving direction and the moving distance.

The image processor may enlarge the size when the moving direction is a preset direction and reduces the size when the moving direction is in a direction opposite to the preset direction.

The foregoing and other aspects of the present invention can be achieved by providing an external input apparatus that communicates with a display apparatus, including: a main body; an external apparatus communication unit which communicates with the display apparatus; a sensor which detects a phase shift according to a movement of the main body when satisfying a preset condition; and a processor which transmits information related to the phase shift detected by the sensor to the display apparatus so that an image displayed in the display apparatus is rotated corresponding to the phase shift.

The sensor may sense a rotation direction and a rotation angle of the main body on a predetermined axis.

The processor may transmit information related to the rotation direction and the rotation angle detected by the sensor to the display apparatus so that an image displayed in the display apparatus is rotated in the rotation direction and by the rotation angle.

The processor may generate a command to rotate an image displayed in the display apparatus in the rotation direction and by the rotation angle and transmits the control command to be executed in the display apparatus.

The sensor may further detect a moving direction and a moving distance according to a linear movement of the main body, and the image processor further transmits information related to the detected moving direction and the detected moving distance to the display apparatus so that a size of an image displayed in the display unit is adjusted based on the moving direction and the moving distance.

The external input apparatus may further include a user input unit, wherein the sensor detects a phase shift of the main body when a preset input is entered via the user input unit.

The external input apparatus may further include an external apparatus display unit, wherein the processor controls the external input display unit to display an image that is the same as an image displayed on the display apparatus.

The sensor may detect a phase shift of the main body when the image that is displayed on the display apparatus is the same as the image displayed on the external apparatus display unit.

### BRIEF DESCRIPTION OF THE DRAWINGS

The above and other aspects of the present invention will become apparent and more readily appreciated from the following description of the exemplary embodiments, taken in conjunction with the accompanying drawings, in which:
FIG. 1 is a block diagram that shows the configuration of a display system according to a first exemplary embodiment of the present invention;
FIG. 2 is an illustrative view that shows an image displayed in a display apparatus of the display system of FIG. 1;
FIG. 3 is an illustrative view that shows the rotation of the image displayed in the display system of FIG. 2;
FIGS. 4A and 4B are illustrative views that show the rotation of an image in the display apparatus when the image on the display apparatus is the same as the image displayed on an external input apparatus in the display system of FIG. 1;
FIG. 5 is a flow chart that schematically illustrates a process where an image is rotated in the display system of FIG. 1;
FIG. 6 is a flow chart that illustrates a process where an image is rotated based on the rotation of the external input apparatus in the display system of FIG. 1;
FIG. 7 is an illustrative view that shows the adjustment of the size of an image displayed on a display system according to a second exemplary embodiment of the present invention; and
FIG. 8 is a control flow chart that illustrates a process where the size of an image is adjusted in the display system of FIG. 7.

### DETAILED DESCRIPTION OF EXEMPLARY EMBODIMENTS OF THE INVENTION

Below, embodiments of the present invention will be described in detail with reference to accompanying drawings so as to be easily realized by a person having ordinary knowledge in the art. The present invention may be embodied in various forms without being limited to the embodiments set forth herein. Descriptions of known parts are omitted for clarity, and like reference numerals refer to like elements throughout.

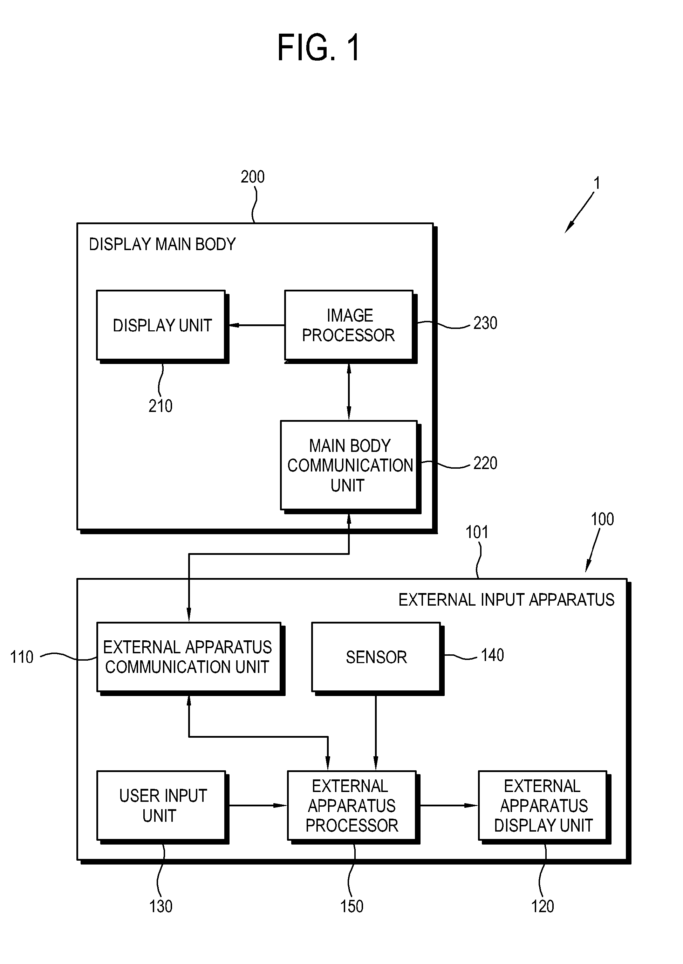

FIG. 1 is a block diagram that illustrates the configuration of a display system 1 according to a first exemplary embodiment of the present invention.

As illustrated in FIG. 1, the display system 1 includes an external input apparatus 100 and a display apparatus 200 that communicates with the external input apparatus 100 and that displays an image or a picture.

In the present exemplary embodiment, the external input apparatus 100 is not limited to a specific configuration as long as it is a device capable of communicating with the display apparatus 200. For example, the external input apparatus may be realized by a remote controller that controls the operation of the display apparatus 200, a portable media player that displays pictures supplied from the display apparatus 200, or an integrated device having these functions. Further, the display apparatus 200 may be a TV, but the display apparatus 200 is not limited thereto, and may be realized by a monitor supplied with pictures from a computer.

In the present exemplary embodiment, as for a picture displayed on the display apparatus 200, when a user operates the external input apparatus 100, the display apparatus 200 detects a phase shift of the external input apparatus 100 and rotates the picture displayed on the display apparatus 200 based on the detected phase shift. Accordingly, it is possible for a user to easily rotate a displayed image.

Hereinafter, the components of the external input apparatus 100 and the display apparatus 200 will be described, respectively. In the present embodiment, the external input apparatus 100 can control the operation of the display apparatus 200 and is provided to display images displayed on the display apparatus 200. However, the foregoing configuration does not limit the present invention, and the external input apparatus 100 may be realized by a remote controller of the display apparatus 200.

The external input apparatus 100 includes an external input apparatus main body 101 having an external apparatus communication unit 110 that communicates with the display apparatus 200, an external apparatus display unit 120 that displays images, a user input unit 130 managed by a user, and an external apparatus processor 150 that controls the foregoing components. The external input apparatus 100 of the present embodiment further includes a sensor 140 that detects a phase shift of the external input apparatus 100 itself, and more specifically, the shift of the external input apparatus main body 101. Here, the sensor 140 of the present embodiment is included in the external input apparatus main body 101.

The external apparatus communication unit 110 is provided to send data to and receive data from the display apparatus 200. For example, the external apparatus communication unit 110 receives images from the display apparatus 200 so that the received images are displayed on the external apparatus display unit 120. Also, the external apparatus communication unit 110 transmits information related to the phase shift of the external input apparatus 100 detected by the sensor 140 to the display apparatus 200.

The external apparatus communication unit 110 may employ protocols for wireless communication such as Zigbee or Bluetooth.

The external apparatus display unit 120 displays images that may be stored in itself or that are received from the display apparatus 200 according to the control of the external apparatus processor 150. The external apparatus display unit 120 may be formed by a technology applied to a liquid crystal display, or the like, in consideration of slimness and lightness.

The user input unit 130 is operated by a user to transmit preset input information to the external apparatus processor 150. The user input unit 130 is realized by keys or buttons installed on the outside of the external input apparatus 100, or may be formed on a touch screen if the external apparatus display unit 120 is provided as the touch screen.

The sensor 140 detects the phase shift of the external input apparatus 100 as it is moved. Here, the external input apparatus 100 is shifted as a user moves the external input apparatus 100 in his or her hand.

The detection of the phase shift by the sensor 140 is carried out under predetermined conditions. The predetermined conditions are not specifically limited, but may be satisfied when a user carries out a predetermined input via the user input unit 130. Also, when the same image is displayed on the external apparatus display unit 120 and on the display apparatus 200, the sensor 140 may be set up to detect a phase shift without an input by a user.

Information detected by the sensor 140 includes the rotation direction and the rotation angle of the external input apparatus 100 on a certain axis. When the external input apparatus 100 is rotated by a user, the sensor 140 detects the rotation direction and the rotation angle of the external input apparatus 100 and transmits the detected rotation and angle to the external apparatus processor 150. Here, the sensor 140 is not limited to a specific configuration, but may employ a gyro-sensor.

The external apparatus processor 150 transmits information related to the detected phase shift of the external input apparatus 100, specifically the rotation direction and the rotation angle of the external input apparatus 100, detected by the sensor 140, to the display apparatus 200. The external apparatus processor 150 controls the sensor 140 to detect a phase shift according to an input of the user that is operating the input unit 130, or enables the external apparatus display unit 120 to display an image received from the external apparatus communication unit 110.

Next, the components of the display apparatus 200 will be explained as follows.

The display apparatus 200 includes a display unit 210 that displays images, a main body communication unit 220 that communicates with the external input apparatus 100, and an image processor 230 that processes images to be displayed and that controls the aforementioned components. In the present embodiment, the image processor 230 controls the components of the display apparatus 200 and conducts image processing, but is not limited thereto, and separate components may be provided to carry out the respective functions.

The display unit 210 displays images input from an external source, such as the external input apparatus 100, or that are saved in the display apparatus 200. Although not limited to a specific configuration, the display unit 210, for example, may be realized by a liquid crystal display, a plasma display panel, or other similar display device.

The main body communication unit 220 sends data to and receives data from the external input apparatus 100. In the present exemplary embodiment, the main body communication unit 220 receives information related to the phase shift of the external input apparatus 100, e.g., the rotation direction and the rotation angle of the external input apparatus 100, transmitted from the external input apparatus 100. Accordingly, the main body communication unit 220 may employ wireless communication protocols, such as Zigbee or Bluetooth, to communicate with the external apparatus communication unit 110.

The image processor 230 processes images, input from an external source or images that are stored in the display apparatus 200, which are to be displayed on the display unit 210. Accordingly, the image processor 230 may include a decoder corresponding to the format of an image, a scaler that adjusts the size of an image to be displayed by the display unit 210, a processor to control these functions, or the like. The image processor 230 may be realized by a group of components having separate functions or an integrated unit having multiple functions.

While a certain image is being displayed on the display unit 210, when receiving information related to the rotation direction and the rotation angle of the external input apparatus 100 via the main body communication unit 220, the image processor 230 rotates the image displayed on the basis of the received information.

For example, when receiving information related to the clockwise rotation of the external input apparatus 100 by 90 degrees on a certain axis, the image processor 230 rotates an image displayed on the display unit 210 by 90 degrees clockwise.

The image processor 230 may carry out the control processes in succession or in stages.

For example, while the main body communication unit 220 continually receives information related to changes in the rotation direction and the rotation angle of the external input apparatus 100, the image processor 230 rotates the displayed image simultaneously according to the changes in rotation direction and rotation angle.

Also, with the preset angle subdivided into stages, e.g., 0, 90, 180, and 270 degrees, if an angle received by the main body communication unit 220 corresponds thereto, the image processor 230 rotates an image by the corresponding preset angle.

Further, image processor 230 performs scaling in rotating an image so that the image is adjusted in size to be appropriately displayed by the display unit 210. Without scaling the image, a portion of the image may not be displayed as the image is rotated.

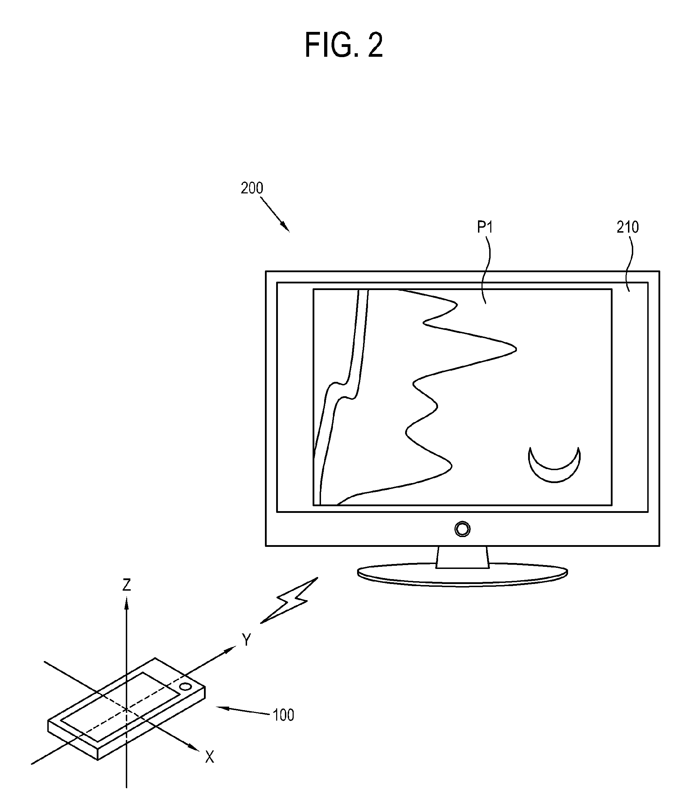

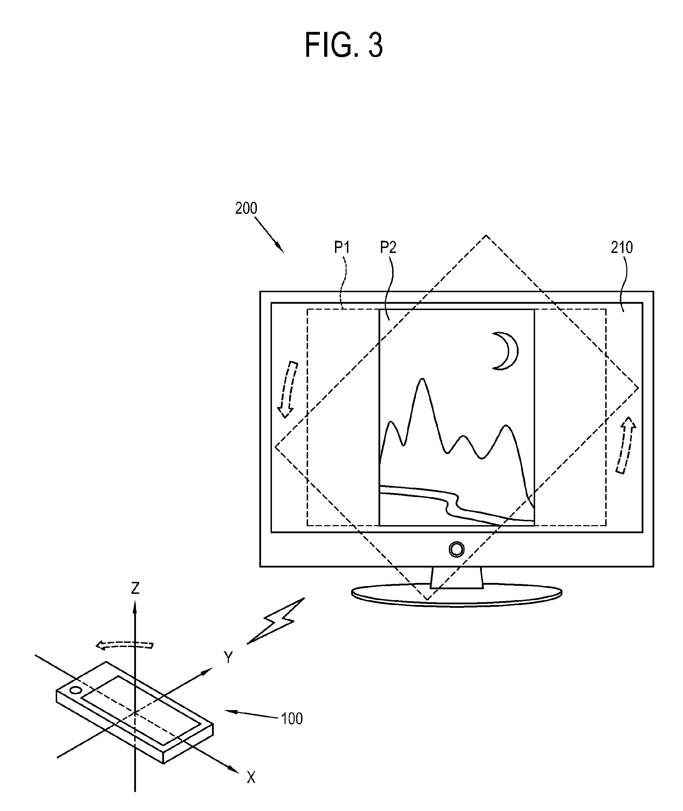

Hereinafter, an illustrative example of rotating an image P1 displayed on the display apparatus 200 will be described with reference to FIGS. 2 and 3.

FIG. 2 is an illustrative view to show the image P1 displayed as being rotated on the display apparatus 200, which is referred to as an initial state.

As illustrated in FIG. 2, the display unit 210 has a longer horizontal side than a vertical side, and thus the image P1 in portrait format is displayed on the display unit 210 as being rotated.

In order to rotate the image, a user rotates the external input apparatus 100. In the present embodiment with reference to FIG. 2 showing X-axis, Y-axis, and Z-axis, the sensor 140 detects that the external input apparatus 100 is rotated parallel with X-Y surface on the Z-axis. However, the present invention is not limited to the aforementioned case, but the X-axis or the Y-axis may be selected instead of the Z-axis, or the sensor 140 may be configured to detect rotation on a plurality of axes.

In FIG. 2, the image P1 needs to be rotated 90 degrees counterclockwise to be properly displayed. Thus, a user rotates the external input apparatus 100 accordingly.

FIG. 3 is an illustrative view to show the rotation of the image on the display unit 210 in FIG. 2.

As illustrated in FIG. 3, a user rotates the external input apparatus 100 counterclockwise on the Z-axis. Accordingly, the image P1 is rotated counterclockwise in accordance with the phase shift of the external input apparatus 100.

When the rotation angle of the external input apparatus 100 comes to 90 degrees, an image P2 is displayed after rotation by 90 degrees. Then, the user suspends the rotation of the external input apparatus 100, and the image P2 is displayed at the rotation angle.

Here, the image P2 is adjusted in size in view of the initial image P1 to be entirely displayed in the display unit 210.

If configured to rotate an image in succession, the image is continuously rotated between the initial image P1 and the result image P2, and accordingly the size of the image is constantly adjusted as well.

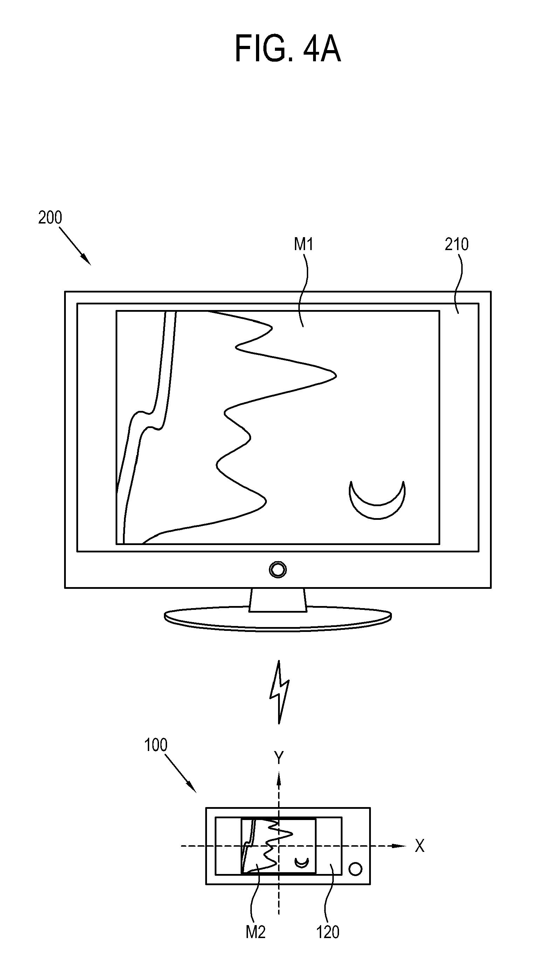

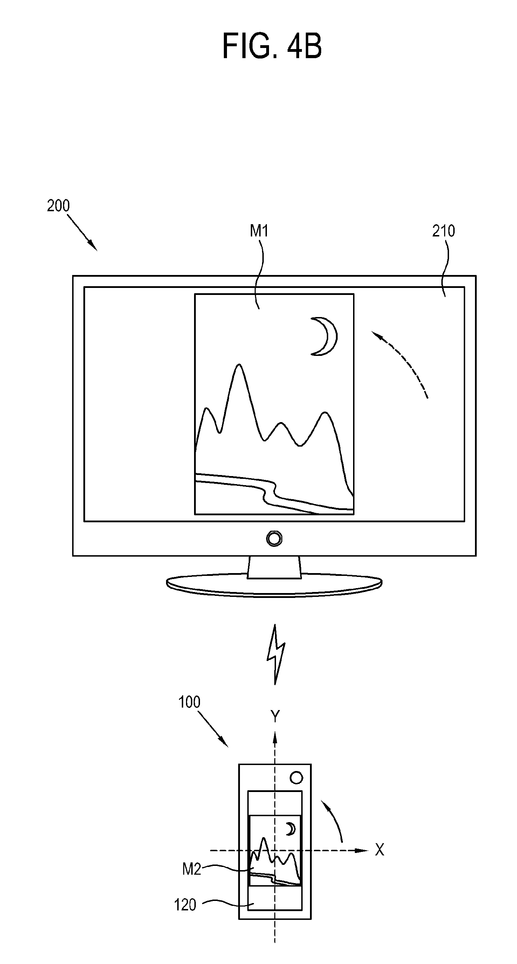

Meanwhile, the external apparatus processor 150 controls the external apparatus display unit 120 to display the same image as the image displayed on the display apparatus 200, which is explained with reference to FIGS. 4A and 4B.

FIGS. 4A and 4B are illustrative views that show the rotation of an image on the display apparatus 200 where the image displayed on the external input apparatus 100 is the same as the image displayed on the display apparatus 200.

Referring to FIG. 4A, a first image M1 is displayed on the display unit 210 of the display apparatus 200, and a second image M2 is displayed on the external apparatus display unit 120 by the external apparatus processor 150.

Here, if the first image M1 is the same as the second image M2, the sensor 140 detects the phase shift of the external input apparatus 100 even if the user does not conduct an input through the input unit 130. However, the present invention is not limited to the aforementioned, and the sensor 140 may operate when a specific input is conducted via the user input unit 130.

Here, the external apparatus processor 150 receives data corresponding to the first image M1 from the display apparatus 200, so that the second image M2 is displayed on the external apparatus display unit 120.

If the first image M1 is required to be rotated 90 degrees counterclockwise, the user rotates the external input apparatus 100 by 90 degrees counterclockwise.

Accordingly, as shown in FIG. 4B, the first image M1 is rotated according to the rotation of the external input apparatus 100. In this case, the second image M2 may be rotated in accordance with the rotation of the first image M1, but the second image M2 is preferably not rotated and maintains its initial state since the external input apparatus 100 itself is rotated by the user.

Meanwhile, if the second image M2 and the first image M1 are different from each other, the sensor 140 is configured to operate under the condition that a preset input is conducted via the user input unit 130.

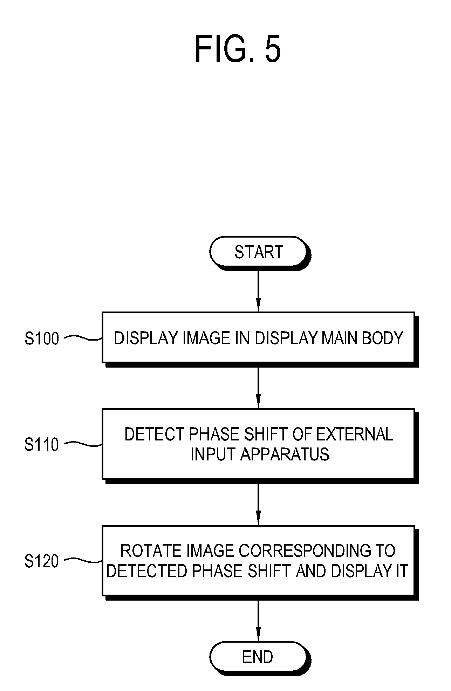

With this configuration, a process of controlling image display in the display system 1 according to the present exemplary embodiment will be described with reference to FIG. 5. FIG. 5 is a flow chart that schematically illustrates the process.

In the present exemplary embodiment, as illustrated in FIG. 5, an image is displayed on the display apparatus 200 (S100). In this state, when the phase shift of the external input apparatus 100 is detected (S110), the image is rotated based on the detected phase shift (S120).

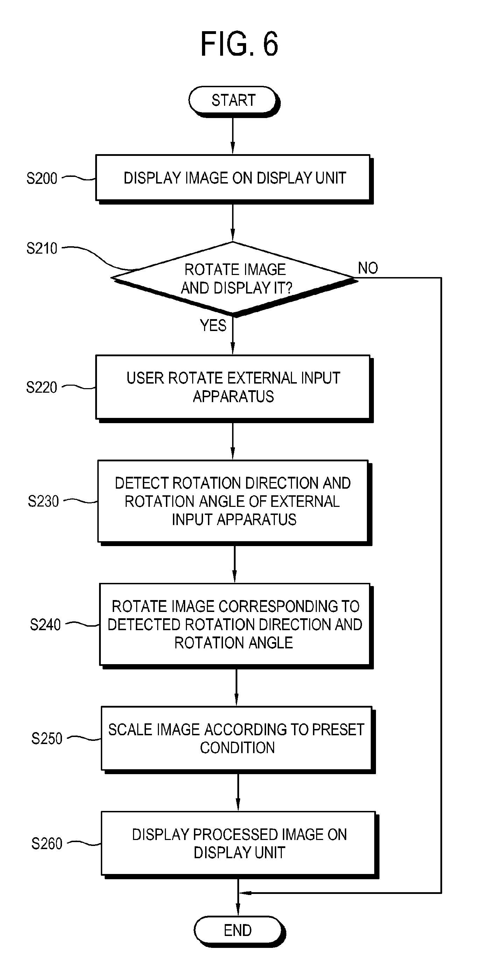

Hereinafter, a control process to rotate an image displayed on the display apparatus 200 corresponding to the rotation of the external input apparatus 100 will be described with reference to FIG. 6. FIG. 6 is a flow chart that illustrates the process.

The image processor 230 displays an image on the display unit 210 (S200). If the image needs to be rotated (S210), a user rotates the external input apparatus 100 in a certain direction by a certain angle (S220).

Accordingly, the sensor 140 detects the rotation direction and the rotation angle of the external input apparatus 100 (S230). The information detected by the sensor 140 is transmitted to the display apparatus 200 by the control of the external apparatus processor 150.

The image processor 230 receives the rotation information from the external input apparatus 100 and processes the image displayed on the display unit 210 based on the rotation direction and the rotation angle detected by the sensor 140 (S240). Also, the image processor 230 scales the image to satisfy preset conditions, e.g., scaling the rotated image so that the rotated image is entirely displayed on the display unit 210 (S250).

When the rotation and the scaling of the image are completed, the image processor 30 displays the processed image on the display unit 210 (S260).

According to the configuration and the process described above, an image displayed on the display unit 210 is rotated based on a user rotating the external input apparatus 100.

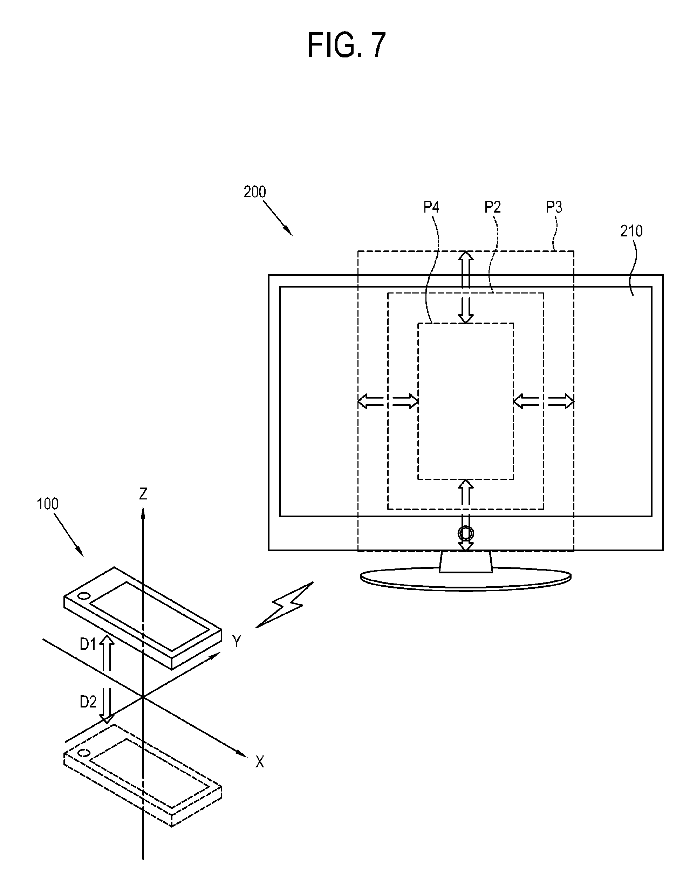

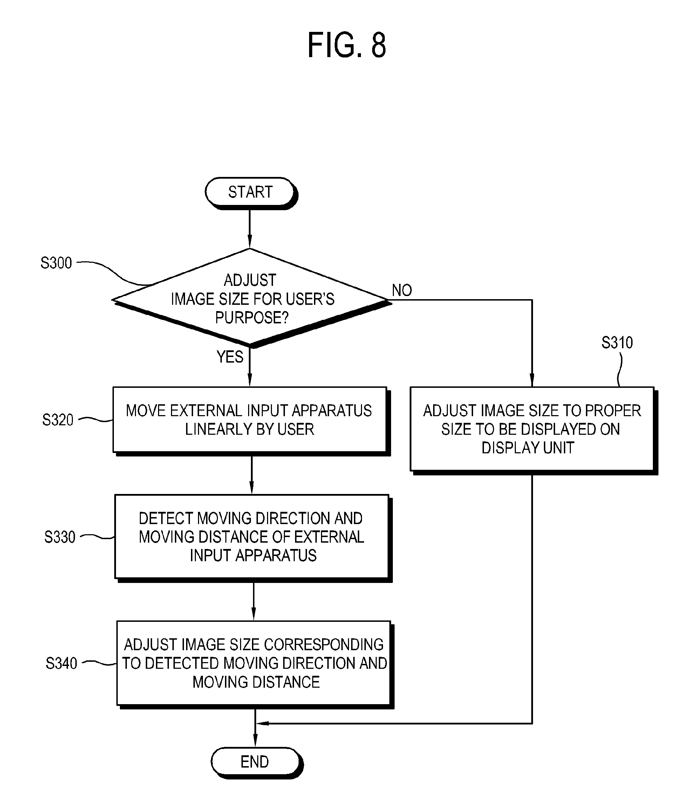

Meanwhile, although an image is scaled to correspond to the display unit 210 when being rotated in the first embodiment, the present invention is not limited thereto. In comparison, as illustrated in FIG. 3, the rotated image P2 is relatively smaller in size than the image P1. Thus, the present invention, for example, may be configured to scale an image to adjust the image size while the image is being rotated. Referring to FIGS. 7 and 8, the present invention will be described with the aforementioned case according to a second exemplary embodiment.

FIG. 7 is an illustrative view that shows adjusting the size of a rotated image in a display system 1 according to a second exemplary embodiment.

As illustrated in FIG. 7, when a user rotates an external input apparatus 100 on the Z-axis, an image processor 230 scales an image to be displayed corresponding to a display unit 210. In this case, the image is referred to as P2.

In this state, the user linearly moves the external input apparatus 100 by a predetermined distance in a predetermined direction, e.g., upward along the Z-axis in a direction D1. A sensor 140 detects the linearly moving direction and the moving distance, and an external apparatus processor 150 transmits the information detected by the sensor 140 to a display apparatus 200.

The image processor 230 enlarges the image from P2 to P3 based on the moving direction and the moving distance of the external input apparatus 100. However, since the display unit 210 has a fixed size, the part of the enlarged image P3 is not displayed.

If reducing the image from P2 to P4, the user linearly moves the external input apparatus 100 downward along the Z-axis a direction D2. Here, the movement is detected, movement information is transmitted to the display apparatus 200, and the image processor 230 reduces the image from P2 to P4.

Although D1 and D2 have been described as opposite directions in the present embodiment, the present invention is not limited thereto. However, when D1 and D2 are defined as opposite directions, the user can recognize directions easily.

Also, D1 and D2 are described as being on the Z-axis, but the present invention is not limited thereto, and instead linear movement may be detected in the X-axis or the Y-axis, or a combination of axes.

With reference to FIG. 8, a process where an image to be displayed is adjusted in size based on the linear movement of the external input apparatus 100 in the display system 1 according to the exemplary second embodiment of the present invention will be described as follows. FIG. 8 is a flow chart that illustrates the aforementioned process.

As illustrated in FIG. 8, the user selects whether to adjust the size of a displayed image (S300). When the user does not adjust the image size, the processor 230 adjusts the image to a proper size to be displayed on the display unit 210 and displays the adjusted image (S310).

When the user adjusts the image size, the user linearly moves the external input apparatus 100 (S320). Accordingly, the sensor 140 detects the moving direction and the moving distance of the external input apparatus 100 (S330) .

The external apparatus processor 150 transmits information related to the moving direction and the moving distance to the display apparatus 200 via an external apparatus communication unit 110. The image processor 230 adjusts the size of the image displayed on the display unit 210 based on the moving direction and the moving distance (S340).

Thus, an image is easily adjusted in size and displayed on the display apparatus 200.

Meanwhile, in the foregoing exemplary embodiment, the external input apparatus 100 transmits the information related to the rotation direction and the rotation angle of the external input apparatus 100 detected by the sensor 140 to the display apparatus 200, and the image processor 230 rotates an image displayed on the display unit 210 based on the received information. However, the present invention is not limited to the exemplary embodiment. For example, the external apparatus processor 150 generates a control command to rotate an image displayed on the display unit 210 in a rotation direction and by a rotation angle which are detected by the sensor 140. The external apparatus processor 150 transmits the control command to the display apparatus 200, and the image processor 230 executes the control command to rotate the image on the display unit 210.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling a display system to display an image, the method comprising:
displaying an image on a display apparatus (200);
detecting a phase shift of an external input apparatus (100);
transmitting information indicating the detected phase shift from the external input apparatus (100) to the display apparatus (200); and
rotating the image displayed on the display apparatus (200) based on the phase shift indicated by the received information and displaying the rotated image on the display apparatus (200).

2. The method according to claim 1, wherein the detecting the phase shift comprises detecting at least one of a rotation direction and a rotation angle of the external input apparatus (100) on a predetermined axis of the external input apparatus (100).

3. The method according to claim 2, wherein the rotating and displaying the image comprises one of continuously changing a display angle of the image displayed on the display apparatus (200) while the phase shift of the external input apparatus (100) is being detected and changing the display angle of the image by predetermined angles of rotation according to changes in the rotation angle of the external input apparatus.

4. The method according to claim 2, wherein the rotating and displaying the image comprises rotating the image displayed on the display apparatus in the detected rotation direction and by an angle equal to the detected rotation angle.

5. The method according to claim 1, wherein the rotating and displaying the image comprises scaling the image displayed on the display apparatus to adjust a size of the image displayed on the display apparatus according to a preset condition.

6. The method according to claim 5, wherein the scaling the image displayed on the display apparatus further comprises adjusting a size of the rotated image to be entirely displayed on the display apparatus.

7. The method according to claim 5, wherein the scaling the image comprises:
detecting at least one of a moving direction and a moving distance in which the external input apparatus is linearly moved; and
adjusting a size of the image displayed on the display apparatus based on the at least one of the detected moving direction and the detected moving distance.

8. The method according to claim 7, wherein the adjusting the size of the image displayed on the display apparatus based on the at least one of the detected moving direction and the detected moving distance comprises enlarging the size of the image if the moving direction is in a preset direction and reducing the size of the image if the moving direction is in a direction opposite to the preset direction.

9. The method according to claim 1, wherein the external input apparatus comprises a user input unit, and the detecting the phase shift comprises detecting a phase shift of the external input apparatus if a preset input is entered via the user input unit.

10. The method according to claim 1, wherein the displaying the image on the display apparatus comprises displaying an image on the display apparatus that is the same as an image displayed on the external input apparatus.

11. The method according to claim 10, wherein the detecting the phase shift comprises detecting a phase shift of the external input apparatus if the image displayed on the display apparatus is the same as the image displayed on the external input apparatus.

12. A display system (1) comprising:
an external input apparatus (100) comprising:
an external input apparatus main body (101); and
a sensor (140) that detects a phase shift of the external input apparatus main body; and
a display apparatus (200) comprising:
a communication unit (220) that communicates with the external input apparatus;
a display unit (210) that displays an image; and
an image processor (230) that rotates the image displayed on the display unit based on the phase shift detected by the sensor.

13. A display apparatus (200) comprising:
a communication unit (220) which communicates with an external input apparatus;
a display unit (210) which displays an image; and
an image processor (230) which rotates the image displayed on the display unit based on a phase shift of the external input apparatus if the communication unit receives information related to the phase shift of the external input.

14. An external input apparatus (100) for controlling an image displayed on a display apparatus (200), comprising:
a main body (101);
an external apparatus communication unit (110) which communicates with the display apparatus;
a sensor (140) which detects a phase shift of the main body; and
a processor (150) which transmits information indicating the phase shift detected by the sensor to the display apparatus so that the image displayed on the display apparatus is rotated corresponding to the phase shift indicated by the transmitted information.
